# EUROPEAN PATENT APPLICATION

(11) **EP 2 051 551 A2**
(43) Date of publication of application: **22.04.2009**
(21) Application number: 08017809.8
(22) Date of filing: 10.10.2008
(51) Int. Cl.: H04W 16/14

(54) **System and method for improving bluetooth performance in the presence of a coexistent, non-bluetooth, wireless device**

(30) Priority: 18.10.2007 US 874598
(71) Applicant: Broadcom Corporation, Irvine CA 92617 (US)
(72) Inventor: Lu, Gang c/o Broadcom Corporation, Irvine, CA 92617 (US); Ding, Shawn, 92131 San Diego CA (US)
(74) Representative: Jehle, Volker Armin

(57) **Abstract**

System and method for improving Bluetooth performance in the presence of a coexistent, non-Bluetooth, wireless device. The method comprises a packet traffic arbitration between a Bluetooth device and a first non-Bluetooth device. When a Bluetooth transaction is initiated from the Bluetooth device, an advisory packet is sent to a second non-Bluetooth device, that upon reception of the advisory packet refrains from transmitting to the first non-Bluetooth device. Aspects of the present invention may be embodied in a single device or multiple devices that operate in a geographic area.

## Description

### RELATED APPLICATIONS

[Not Applicable]

### FEDERALLY SPONSORED RESEARCH OR DEVELOPMENT

[Not Applicable]

### [MICROFICHE/COPYRIGHT REFERENCE]

[Not Applicable]

### BACKGROUND OF THE INVENTION

The Bluetooth standard (IEEE 802.15) may be used in a variety of products such as phones, printers, modems, and headsets. Bluetooth may be used when two or more devices are in proximity to each other and the devices do not require high bandwidth. A Bluetooth radio may use spread spectrum frequency hopping with 79 hops displaced by 1 MHz, starting at 2.402 GHz and finishing at 2.480 GHz.

IEEE 802.11 standards (e.g. 802.11b, 802.11g, and 802.11n) may be better suited for operating full-scale networks because IEEE 802.11 standards enable a faster connection, a better range, and better security than Bluetooth. Networks that are built on an IEEE 802.11 standard are typically referred to as Wireless Local Area Networks (WLANs) since they offer wireless alternatives to wired local-area networks. WLAN service may be referred to as Wi-Fi service. In WLAN the Media Access Controller (MAC) uses contention access. WLAN Stations (STAs) compete for the access to a wireless access point (AP) on a random interrupt basis. 802.11b, 802.11g, and 802.11n device may operate in the 2.4 GHz band.

Worldwide Interoperability for Microwave Access (WiMAX) is based on the IEEE 802.16 standards. In WiMAX, stations need to compete only once for initial entry into the network. After initial access, the WiMAX station is allocated an access slot by the base station. The time slot can enlarge and contract, but remains assigned to the WiMAX station, which means that other WiMAX stations cannot use it. The scheduling algorithm may also allow the base station to control QoS parameters by balancing the time-slot assignments among the application needs of all WiMAX stations. WiMAX standards in IEEE 802.16 may cover spectrum ranges from the 2 GHz range through the 66 GHz range.

Ultra-wideband (UWB) is a radio technology, based on the IEEE 802.15.3a standard that can be used for short-range high-bandwidth communications. UWB may use OFDM transmission technology. UWB may enable wireless connectivity between monitors, camcorders, cameras, printers, personal multimedia players and/or cell phones. UWB may also be used in local/personal area networks. The UWB bandwidth may be at least 25% of the center frequency. Thus, a UWB signal centered at 2 GHz would have a minimum bandwidth of 500 MHz, and the minimum bandwidth of a UWB signal centered at 4 GHz would be 1 GHz.

Bluetooth devices may share the same RF spectrum with one or more other wireless standards (e.g. WLAN, WiMAX, or UWB). This is known coexistence. If the Bluetooth radio transmits simultaneously with the radio of another standard, these transmissions may interfere with each other.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for improving Bluetooth coexistence with other wireless standards as shown in and/or described in connection with at least one of the figures, as set forth more completely in the claims. Advantages, aspects and novel features of the present invention, as well as details of an illustrated embodiment thereof, will be more fully understood from the following description and drawings.
According to an aspect, a method for improving Bluetooth performance is provided, wherein the method comprises:
performing a packet traffic arbitration between a Bluetooth device and a first non-Bluetooth device;
initiating a Bluetooth transaction from the Bluetooth device; and
sending an advisory packet to a second non-Bluetooth device, wherein the second non-Bluetooth device refrains from transmitting to the first non-Bluetooth device upon reception of the advisory packet.
Advantageously, the Bluetooth transaction is one of an inquiry and a page.
Advantageously, the Bluetooth transaction is a scan for one of an inquiry and a page.
Advantageously, the advisory packet is one of a clear-to-send packet and a packet service request packet.
Advantageously, the second non-Bluetooth device is an access point.
Advantageously, the second non-Bluetooth device operates according to an IEEE wireless standard.
Advantageously, the second non-Bluetooth device operates according to a wireless standard in a frequency band that coincides with the Bluetooth transaction.
Advantageously, the second non-Bluetooth device operates according to a wireless local area network standard.
Advantageously, the second non-Bluetooth device operates according to a wireless personal area network standard.
Advantageously, the second non-Bluetooth device operates according an IEEE 802.11 standard.
Advantageously, the second non-Bluetooth device operates according an IEEE 802.15 standard.
Advantageously, the second non-Bluetooth device operates according an IEEE 802.16 standard.
According to an aspect, a system for improving Bluetooth performance comprises:
a Bluetooth device for initiating a Bluetooth transaction;
a first non-Bluetooth device, wherein a packet traffic arbitration is performed between the Bluetooth device and the first non-Bluetooth device; and
a circuit for sending an advisory packet to a second non-Bluetooth device, wherein the second non-Bluetooth device refrains from transmitting upon reception of the advisory packet.
Advantageously, the circuit is physically coupled to the Bluetooth device. Advantageously, the Bluetooth transaction is one of an inquiry and a page.
Advantageously, the Bluetooth transaction is a scan for one of an inquiry and a page.
Advantageously, the advisory packet is one of a clear-to-send packet and a packet service request packet.
Advantageously, the second non-Bluetooth device is an access point.
Advantageously, the second non-Bluetooth device operates according to an IEEE wireless standard.
Advantageously, the second non-Bluetooth device operates according to a wireless standard in a frequency band that coincides with the Bluetooth transaction.
Advantageously, the second non-Bluetooth device operates according to a wireless local area network standard.
Advantageously, the second non-Bluetooth device operates according to a wireless personal area network standard.
Advantageously, the second non-Bluetooth device operates according an IEEE 802.11 standard.
Advantageously, the second non-Bluetooth device operates according an IEEE 802.15 standard.
Advantageously, the second non-Bluetooth device operates according an IEEE 802.16 standard.

### BRIEF DESCRIPTION OF THE DRAWINGS

**FIGURE 1** is an illustration of an exemplary system for 3-wire communication between a Bluetooth radio and a WLAN radio in accordance with a representative embodiment of the present invention;

**FIGURE 2** is a flowchart illustrating an exemplary method for improving Bluetooth/Non-Bluetooth coexistence in accordance with a representative embodiment of the present invention; and

**FIGURE 3** is an illustration of an exemplary system for improving Bluetooth/Non-Bluetooth coexistence in accordance with a representative embodiment of the present invention.

### DETAILED DESCRIPTION OF THE INVENTION

Bluetooth radios may coexist with one or more other radios that use non-Bluetooth wireless standards (e.g. WLAN, WiMAX, or UWB). Mutual interference, due to coexistence, may result when two radios are attempting to transmit and receive in the same device or the same geographic area.

Aspects of the present invention relate to improving Bluetooth coexistence with a variety of other wireless standards by adding the detection of irregular Bluetooth transactions. The improved performance may enable a higher level of compatibility between Bluetooth radios and other wireless radios regardless of the manufacturer. Aspects of the present invention may minimize retransmission by reducing interference. Although the following description may refer to a particular wireless local area network standard, many other standards (e.g. IEEE 802.11, IEEE 802.16, and IEEE 802.15.3) may also use these systems and methods.

Bluetooth uses frequency hopping as its access mechanism. Bluetooth radios hop between 79 1-MHz wide channels with 1600 hops per second. WLAN 802.11b/g radios, for example, use a 22-MHz wide channel and access the AP through a Carrier Sensing Multiple Access (CSMA) mechanism. Depending on the relative strength of the WLAN and Bluetooth signals, the Bluetooth reception and/or the WLAN reception will be corrupted if the Bluetooth and WLAN radios are allowed to transmit at the same time while in the vicinity of one another.

The IEEE 802.15.2 standard includes four optional mechanisms that may be used to avoid simultaneous transmission by coexistent WLAN and Bluetooth radios. Adaptive Frequency Hopping is a non-collaborative mechanism that requires the Bluetooth radio to take an independent evasive action to avoid interference. Collaborative mechanisms, which include Packet Traffic Arbitration (PTA), Alternating Wireless Medium Access (AWMA) and Deterministic Spectral Excision (DSE), require the Bluetooth radio and the WLAN radio to exchange information when accessing the medium.

AWMA is a procedure that divides the time interval for transmission and reception into a Bluetooth interval and a WLAN interval. DSE is a suppression technique that puts a null in the WLAN receiver at the frequency of the Bluetooth signal. Since the Bluetooth signal is hopping to a new frequency for each packet transmission, the WLAN receiver needs to know the frequency hopping pattern as well as the timing of the Bluetooth transmitter. PTA uses a dynamic handshake mechanism to authorize transmission before transmitting information.

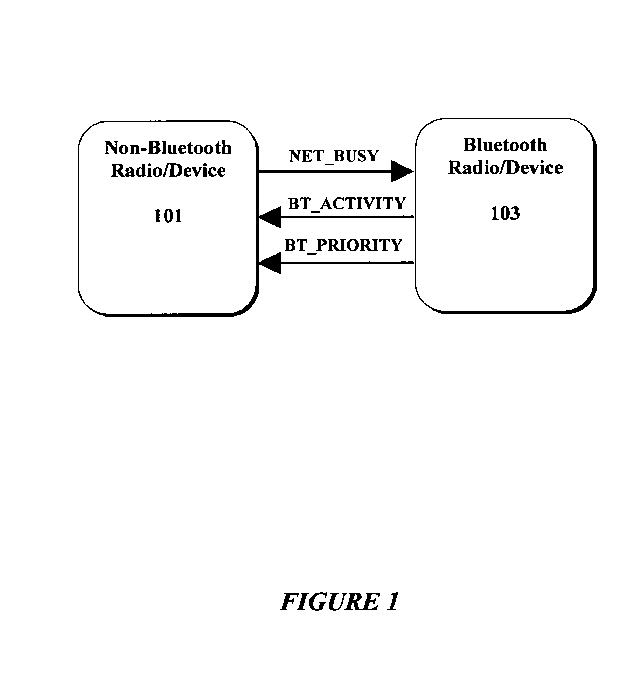

**FIG. 1** is a block diagram illustrating a 3-wire PTA interface, which may be utilized in connection with an embodiment of the invention. A Non-Bluetooth device 101, such as a WLAN radio and a Bluetooth device (or radio) 103 are connected by 3-wire signals. The 3-wire signals include NET_BUSY (e.g. WLAN_BUSY), BT_ACTIVITY, and BT_PRIORITY. A WLAN_BUSY signal may be controlled by a WLAN radio 101. The BT_ACTIVITY signal and the BT_PRIORITY signal may be controlled by the Bluetooth radio 103.

The signal BT_ACTIVITY may be asserted whenever there is any transmission by the Bluetooth radio 103. The signal BT_PRIORITY may be used to signal a priority of a specific Bluetooth packet that is being transmitted by the Bluetooth radio 103. If the signal BT_PRIORITY is not asserted, the WLAN radio 101 may assert the signal WLAN_BUSY when it has data to transmit. Since the Bluetooth radio 103 is transmitting low priority data, it may stop transmitting data. Accordingly, the 3-wire coexistence interface may be used to alleviate interference that may occur when a Bluetooth radio and a WLAN radio transmits at the same time.

However, irregular Bluetooth transactions (e.g. INQ, PAGE, INQ SCAN, and PAGE SCAN) may degrade the 3-wire PTA algorithm. For example, these Bluetooth transaction may cause the Bluetooth device to occupy the shared bandwidth long enough to affect the MAC decisions of a WLAN or WiMAX device. To improve the 3-wire PTA performance during irregular Bluetooth transactions, the PTA may detect such transactions without additional wires or support from Bluetooth radio. By enabling this detection, the PTA may be able to account for these transactions accordingly.

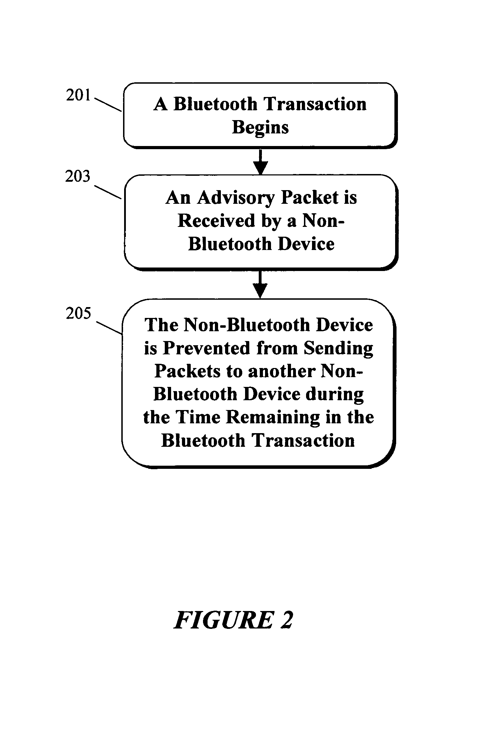

**FIGURE 2** is a flowchart illustrating an exemplary method for improving Bluetooth/Non-Bluetooth coexistence in accordance with a representative embodiment of the present invention.

At 201, a Bluetooth transaction begins. For example, the transaction may be INQ, PAGE, INQ SCAN or PAGE SCAN. During an INQ or PAGE transaction one or more inquiry or paging indicator frames may be transmitted and/or received. INQ SCAN and PAGE SCAN may scan for one or more slots. Packet Traffic Arbitration (PTA) may initially treat INQ, PAGE, INQ SCAN and PAGE SCAN as regular transaction. PTA (e.g. in co-located WLAN STA) may detect the INQ, PAGE, INQ SCAN or PAGE SCAN transaction by monitoring a 3-wire interface connected to a Bluetooth device.

At 203, an advisory packet is received by a non-Bluetooth Device, such as an Access Point (AP). The advisory packet may be, for example, a self Clear-To-Send (CTS) packet or a Packet Service (PS) request packet. The advisory packet may be sent by the Bluetooth device or a non-Bluetooth device (e.g. WLAN STA).

At 205 upon reception of the advisory packet, the non-Bluetooth device is prevented from sending packets to another non-Bluetooth device during the time remaining in the Bluetooth transaction. For example, the advisory packet may prevent a WLAN AP from sending packets to a WLAN station (STA) in the remainder of an INQ/PAGE time or in the remainder of a SCAN time.

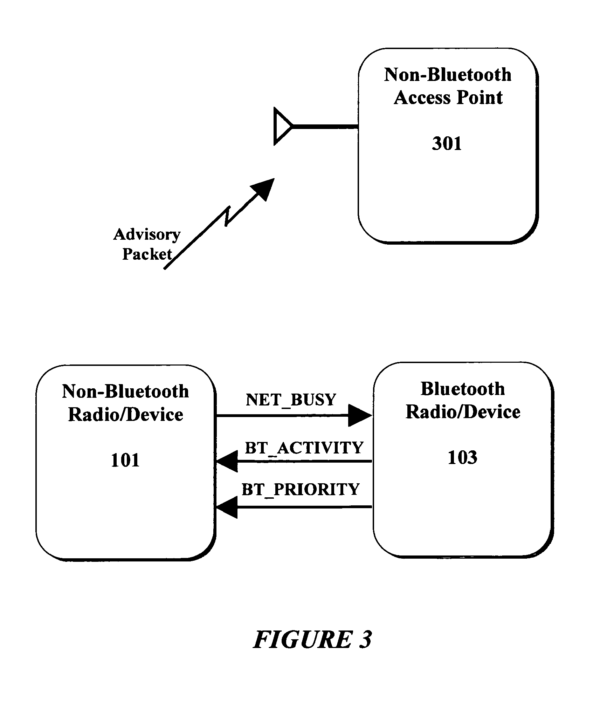

**FIGURE 3** is an illustration of an exemplary system for improving Bluetooth/Non-Bluetooth coexistence in accordance with a representative embodiment of the present invention. The 3-wire interface is described in reference to **FIGURE 1****.** In addition to the 3-wire communication between the Non-Bluetooth device 101 and the Bluetooth device 103, an advisory packet may be received by a non-Bluetooth Access Point (AP) 301 when a Bluetooth transaction begins or sometime thereafter. For example, the Bluetooth transaction may be INQ, PAGE, INQ SCAN or PAGE SCAN. The advisory packet may be, for example, a self Clear-To-Send (CTS) packet or a Packet Service (PS) request packet. The advisory packet may be sent by the Bluetooth device 103, a non-Bluetooth device 101 or station, or the non-Bluetooth AP 301.

Upon reception of the advisory packet, the non-Bluetooth AP 301 is prevented from sending packets to the non-Bluetooth device 103, during the time remaining in the Bluetooth transaction. For example, the advisory packet may prevent a WLAN AP from sending packets to a WLAN STA in the remainder of an INQ/PAGE time or in the remainder of a SCAN time.

The present invention may be realized in hardware, software, or a combination of hardware and software. The present invention may be realized in a centralized fashion in an integrated circuit or in a distributed fashion where different elements are spread across several circuits. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for improving Bluetooth performance, wherein the method comprises:
performing a packet traffic arbitration between a Bluetooth device and a first non-Bluetooth device;
initiating a Bluetooth transaction from the Bluetooth device; and
sending an advisory packet to a second non-Bluetooth device, wherein the second non-Bluetooth device refrains from transmitting to the first non-Bluetooth device upon reception of the advisory packet.

2. The method of claim 1, wherein the Bluetooth transaction is one of an inquiry and a page.

3. The method of claim 1, wherein the Bluetooth transaction is a scan for one of an inquiry and a page.

4. The method of claim 1, wherein the advisory packet is one of a clear-to-send packet and a packet service request packet.

5. The method of claim 1, wherein the second non-Bluetooth device is an access point.

6. The method of claim 1, wherein the second non-Bluetooth device operates according to an IEEE wireless standard.

7. A system for improving Bluetooth performance, wherein the system comprises:
a Bluetooth device for initiating a Bluetooth transaction;
a first non-Bluetooth device, wherein a packet traffic arbitration is performed between the Bluetooth device and the first non-Bluetooth device; and
a circuit for sending an advisory packet to a second non-Bluetooth device, wherein the second non-Bluetooth device refrains from transmitting upon reception of the advisory packet.

8. The system of claim 7, wherein the circuit is physically coupled to the Bluetooth device.

9. The system of claim 7, wherein the Bluetooth transaction is one of an inquiry and a page.

10. The system of claim 7, wherein the Bluetooth transaction is a scan for one of an inquiry and a page.
